# EUROPEAN PATENT SPECIFICATION

(11) **EP 1 201 354 B1**
(45) Date of publication and mention of the grant of the patent: **28.09.2005**
(21) Application number: 01125163.4
(22) Date of filing: 23.10.2001
(51) Int. Cl.: B23Q 7/14, B23Q 11/00, B23Q 5/34

(54) **Machine tool and pallet changer therefor**
Werkzeugmaschine und Palettenwechsler dafür
Machine-outil et changeur de palettes pour celle-ci

(30) Priority: 27.10.2000 JP 2000328301
(43) Date of publication of application: 02.05.2002
(73) Proprietor: Mori Seiki Co., Ltd., Nara-ken 639-1183 (JP)
(72) Inventor: Okuyama, Yoshinobu, Yamatokoriyama-shi, Nara-ken, 639-1183 (JP)
(74) Representative: Kern, Ralf M.

(56) References cited:
- WO-A-99/50020
- DE-C- 19 623 080
- US-A- 5 346 051

## Description

### BACKGROUND OF THE INVENTION

The present invention relates to a machine tool equipped with a pallet changer for automatically replacing a preceding-process pallet with a next-process pallet, as well as to the pallet changer.

For example, machine tools such as vertical machining centers are generally equipped with a pallet changer for, upon completion of the machining of a workpiece on a preceding-process pallet placed on a machining table, automatically changing the preceding-process pallet for a next-process pallet to which an unmachined workpiece is held and which has been stood by at a setup position.

As pallet changers of this kind, there have been provided conventionally, for example, those of the pivot type in which a pivot arm is provided pivotable between a machine-side changing position and a setup position known from US 5346051, or those of the advancing-and-retreating pivot type in which a pivot arm is advanced and retreated and further pivoted. These pallet changers are disposed close to a machine tool.

The pivot-type pallet changers as described above, which have to be disposed close to the machine tool from structural reasons, have a problem that the pallet changer obstructs the operator's maintenance work of the machine tool, making it difficult to ensure the working space.

In the case of the type that the pivot arm is advanced and retreated, although the working space cannot be ensured by making the pallet changer retreatable to a position away from the machine tool, yet the pallet changer would become complex in structure and moreover, in some cases, could not be adopted depending on the structure of the replacement position of the machine tool.

The present invention having been accomplished in view of these and other problems, and object of the invention is to provide a machine tool, as well as a pallet changer therefore, which allows a working space to be ensured without causing any complication of the structure and which is applicable to a wide range.

In order to achieve the above object there is provided a pallet changer for use in a machine tool according to the features of claim 1.

Preferred embodiments of the invention are illustrated in the subclaims.

### BRIEF DESCRIPTION OF THE DRAWINGS

Fig. 1 is an arrangement diagram of a pallet changer of a machine tool according to an embodiment of the invention;
Fig. 2 is a schematic perspective view of the pallet changer;
Fig. 3 is a schematic perspective view of an advance-and-retreat drive mechanism for the pallet changer;
Fig. 4 is a plan view of the pallet changer;
Fig. 5 is a side view of the pallet changer; and
Fig. 6 is a sectional view taken along the line VI - VI of Fig. 4.

### DETAILED DESCRIPTION OF THE PREFERRED EMBODIMENTS

Hereinbelow, an embodiment of the present invention is described with reference to the accompanying drawings.

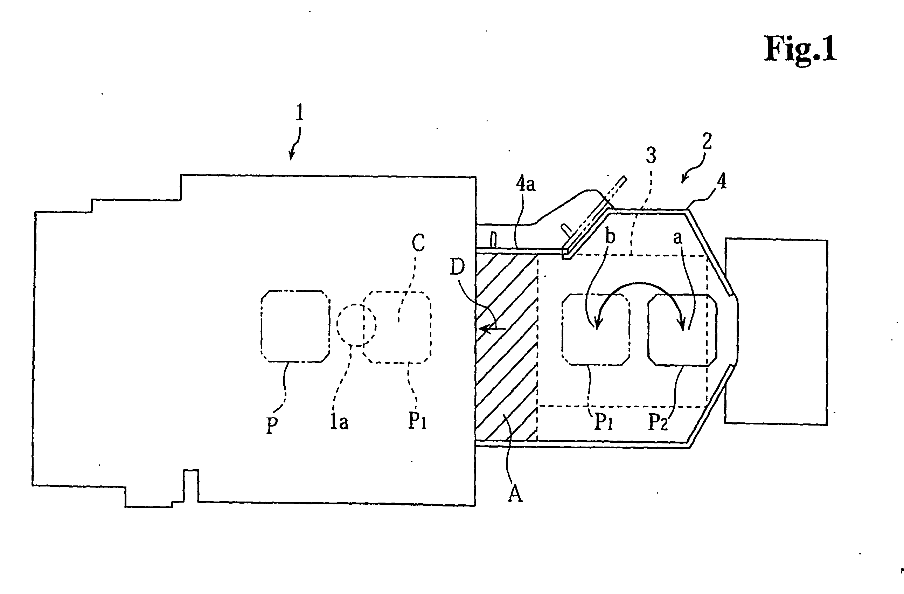

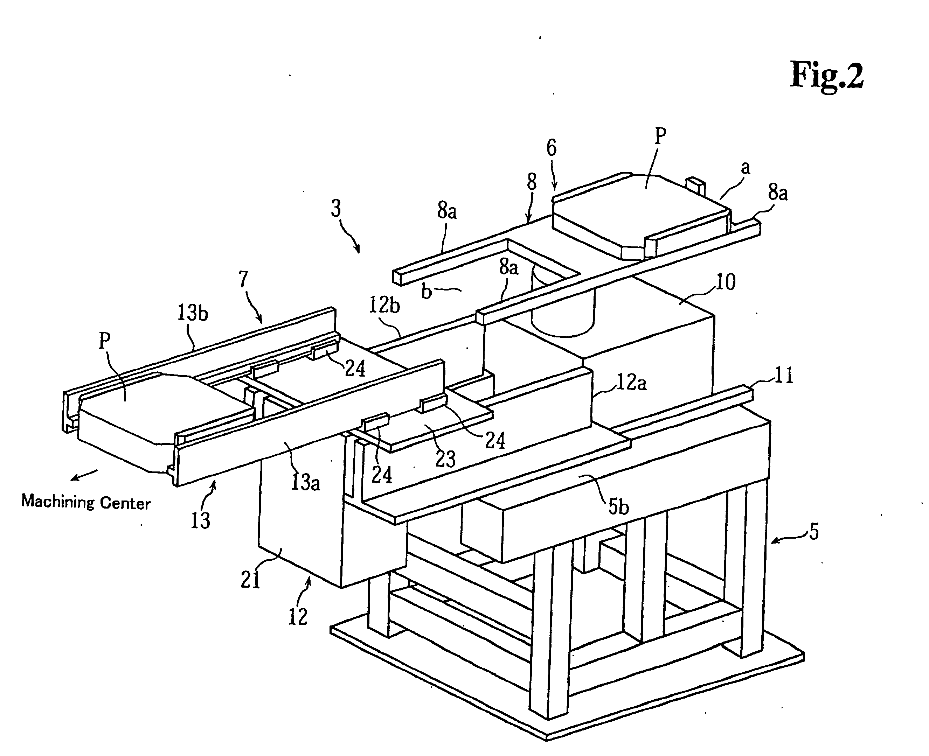

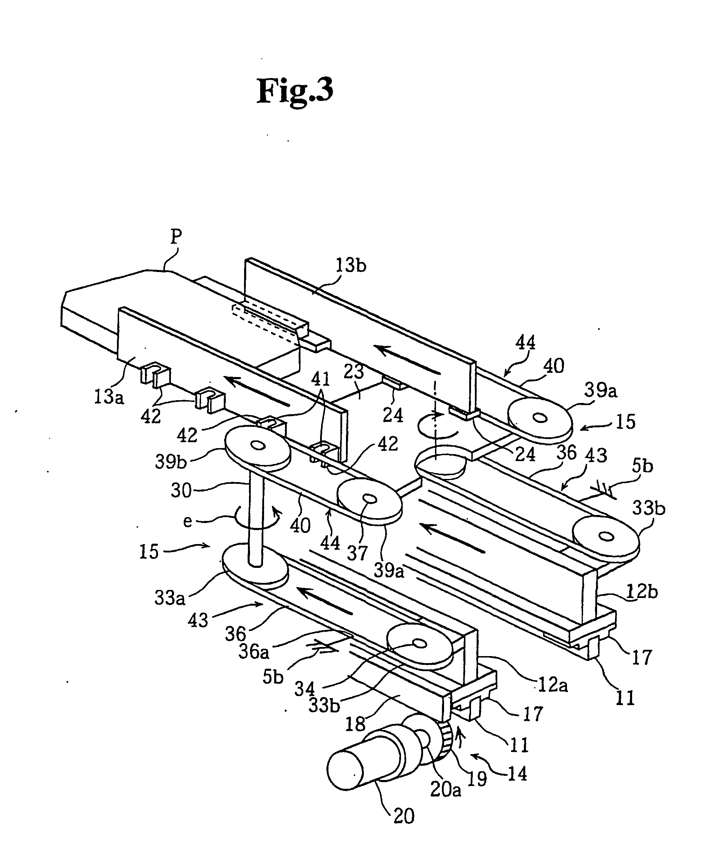

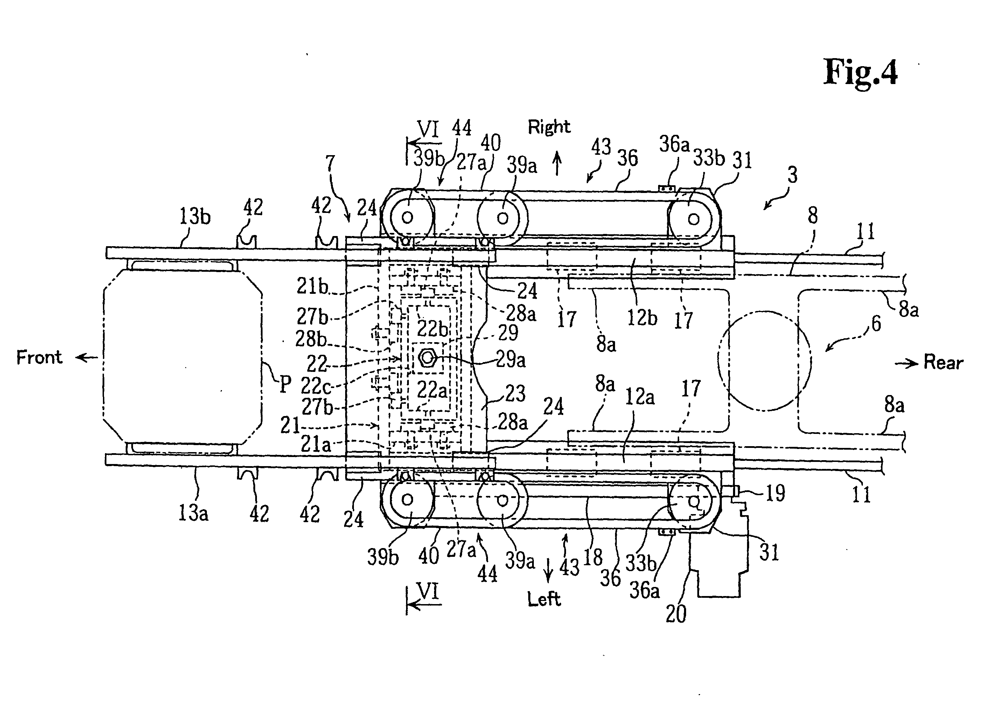

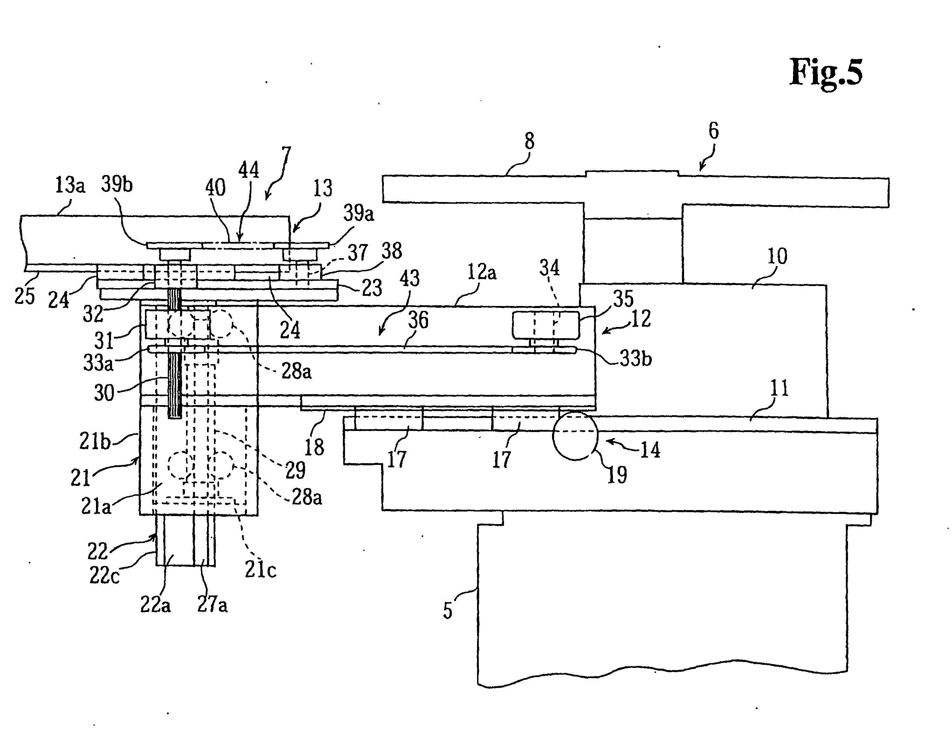

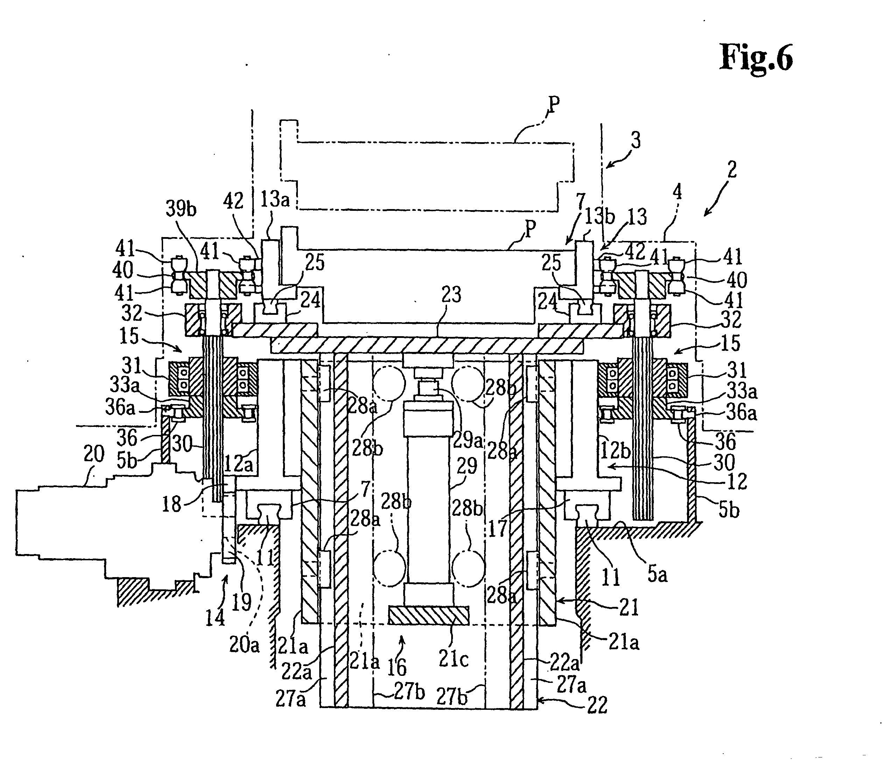

Figs. 1 to 6 are views for explaining a vertical machining center, as well as its pallet changer, according to an embodiment of the present invention. Fig. 1 is a plan view showing the overall construction thereof, Fig. 2 is a schematic perspective view of the pallet changer, Fig. 3 is a schematic perspective view of an advance-and-retreat drive mechanism, and Figs. 4, 5 and 6 are a plan view, a side view and a cross-sectional front view, respectively, of the pallet changer.

In the figures, reference numeral 1 denotes the vertical machining center, and 2 denotes the pallet changer. The vertical machining center 1 moves a vertically disposed spindle 1a in an X-direction (a left-and-right direction as viewed from the machine front in a direction of arrow D) and a Z-direction (an up-and-down direction as viewed similarly), thereby moving a table in a Y-direction (a back-and-forth direction as viewed similarly), by which a workpiece set on a pallet P mounted on the table is subjected to required machining.

The pallet changer 2 is so constructed that a changer body 3 installed in a front of the vertical machining center 1 with a required working space A opened is surrounded by a cover 4, as the working space A is included. Further, the cover 4 is provided with a door 4a for an operator to come into and out of the working space A.

The changer body 3 is comprised of a frame member 5 fixed on an anchor base, a pivotal changer mechanism 6 mounted at a rear portion (a portion far from the machining center 1) of the frame member 5, and an advanceable-and-retreatable relay changer mechanism 7 mounted at a front portion (a portion close to the machining center 1) of the frame member 5.

The frame member 5 is formed from a steel material into a table, having high rigidity and fixed on the anchor base. At a rear portion of the frame member 5, a base portion 10 for pivotably mounting the pivotal changer mechanism 6 thereon is formed so as to project upward. Also, on a table surface 5b of the frame member 5, a left-and-right pair of guide rails 11, 11 for advanceably and retreatably supporting the relay changer mechanism 7 are placed so as to extend in the back-and-forth direction (left-and-right direction in Fig. 2) with the base portion 10 sandwiched therebetween.

The pivotal changer mechanism 6 is so constructed that a pivot arm 8 pivotably disposed on the base portion 10 of the frame member 5 is driven into pivot by a pivot drive motor housed and placed in the base portion 10. The pivot arm 8 has a left-and-right pair of forks 8a, 8a each extending forward and rearward, forming a generally H-shape as a whole. The pivot arm 8 pivots by 180 degrees between a setup position 'a' where setup work of loading or unloading a workpiece onto or from a next-process pallet P2 is performed and a relay changing position 'b' where a pallet P is replaced with another in association with the relay changer mechanism 7.

The relay changer mechanism 7 includes a first arm member 12 advanceably and retreatably supported by the left-and-right guide rails 11, 11 of the frame member 5, a second arm member 13 advanceably-and-retreatably and vertically movably supported by the first arm member 12, a first advance-and-retreat drive mechanism 14 for driving the first arm member 12 into advance and retreat, a second advance-and-retreat drive mechanism 15 for driving the second arm member 13 into advance and retreat by making use of the move of the first arm member 12, and an up-and-down drive mechanism 16 for driving the second arm member 13 upward and downward.

The first arm member 12 is formed into a generally U-shape, as viewed in a plan view, that a left-and-right pair of base arms 12a, 12b advanceably and retreatably supported by the left-and-right guide rails 11, 11 and having an inverted T-shape as viewed in cross section are connected to each other at their front portions by a retainer casing 21. These base arms 12a, 12b, having a front-and-rear pair of linear guides 17, 17 fixed to their respective bottom faces so as to be spaced in the back-and-forth direction, are made advanceable and retreatable in the back-and-forth direction by virtue of the linear guides 17, 17 being fixed to the guide rails 11.

A bar-shaped rack bar 18 having rack teeth at its bottom face is fixed to a lower-end outer side face of the left-side base arm 12a. This rack bar 18 is engaged with a pinion 19. The pinion 19 is fixedly mounted on an output shaft 20a of an advance-and-retreat drive motor 20, and this advance-and-retreat drive motor 20 is fixedly supported on the frame member 5. The first advance-and-retreat drive mechanism 14 that advances and retreats the first arm member 12 by rotating the advance-and-retreat drive motor 20 is made up.

The retainer casing 21 is formed into a rectangular cylindrical shape, and a rectangular-cylindrical shaped guide casing 22 is inserted in the retainer casing 21 so as to be movable up and down. Also, a base plate 23 is fixed to an upper end of the guide casing 22.

Back-and-forth guide bars 27a for preventing back-and-forth vibrations of the guide casing 22 are fixed on outer surfaces of left-and-right side walls 22a, 22b of the guide casing 22, and left-and-right guide bars 27b for preventing left-and-right vibrations of the guide casing 22 are fixed on an outer surface of a front side wall 22c, where the back-and-forth guide bars 27a and the left-and-right guide bars 27b are both fixed along the vertical direction. Then, these guide bars 27a, 27b are guided by guide rollers 28a, 28b, and the guide rollers 28a, 28b are fixed to left-and-right side walls 21a and a front wall 21b of the retainer casing 21.

A piston rod 29a of a hydraulic cylinder 29 of the up-and-down drive mechanism 16 is coupled to a bottom face of the base plate 23, and the hydraulic cylinder 29 is supported by a bottom wall 21c of the retainer casing 21. In this way, expansion and contraction of the hydraulic cylinder 29 causes the base plate 23 and moreover the second arm member 13 to move up and down.

A front-and-rear pair of linear guides 24, 24 are fixedly placed at both side portions of the base plate 23 so as to be spaced in the back-and-forth direction. A guide rail 25 fixed to bottom faces of left-and-right arms 13a, 13b of the second arm member 13 is advanceably and retreatably supported by the both-side linear guides 24, 24.

The second advance-and-retreat drive mechanism 15 that advances and retreats the second arm member 13 is construed as follows. Although this second advance-and-retreat drive mechanism 15 is provided in a pair of left and right, yet the description is made on the left-side second advance-and-retreat drive mechanism 15 only because the paired mechanisms are of the same construction.

A spline shaft 30 and a sprocket shaft 34 are disposed on an outer side face of the left-side base arm 12a. The spline shaft 30 is supported by the base arm 12a via a lower bearing 31 so as to be rotatable and up-and-down movable.

An upper portion of the spline shaft 30 is rotatably and axially immovably supported by an upper bearing 32 fixedly supported to the base plate 23. Also, at a generally middle portion of the spline shaft 30, a lower sprocket 33a is set so as to be capable of transferring rotational force to the spline shaft 30 and axially movable.

The sprocket shaft 34 is rotatably supported by the base arm 12a via a bearing 35, and a lower sprocket 33b is fixed at a lower portion of the sprocket shaft 34. A lower chain 36 is wound and stretched on the two lower sprockets 33a, 33b. This lower chain 36 has its connecting portion 36a fixed to a fixed member 5b erectly provided on the frame member 5. In this way, a lower chain mechanism (driving-side chain mechanism) 43 for rotating the spline shaft 30 along with advance or retreat of the first arm member 12 is made up.

Further, a sprocket shaft 37 is erectly provided on the base plate 23, and an upper sprocket 39a is rotatably supported by the sprocket shaft 37 via a bearing 38. An upper chain 40 is wound and stretched on the upper sprocket 39a and an upper sprocket 39b fixedly mounted at an upper end of the spline shaft 30.

A total of four drive rollers 41 are provided at specified intervals on the upper chain 40. These rollers 41 are engageable with hooks 42 formed on outer side faces of the left-and-right arms 13a, 13b of the second arm member 13. In this way, an upper chain mechanism (driven-side chain mechanism) 44 is made up in which the upper chain 40 is rotated along with rotation of the spline shaft 30, causing the rollers 41 to engage with the hooks 42 so that the left-and-right arms 13a, 13b are advanced and retreated.

Next, operation and working effects of the equipment according to this embodiment are described.

Assume that a preceding-process pallet P1 placed at a changing position 'c' on the machining center 1 side is changed for a next-process pallet P2 placed at the setup position 'a' of the pivotal changer mechanism 6. The relay changer mechanism 7 first advances, then goes up to make the preceding-process pallet P1 at the changing position 'c' mounted thereon, retreats to convey the preceding-process pallet P1 to the relay changing position 'b,' then goes down, and moves and sets the preceding-process pallet P1 onto the pivot arm 8 of the pivotal changer mechanism 6. The pivotal changer mechanism 6 replaces the set preceding-process pallet P1' with the next-process pallet P2 by a 180° turn. Thereafter, the relay changer mechanism 7 goes up to make the next-process pallet P2 mounted thereon, conveys it to the machine-side changing position 'c,' then goes down and moves the next-process pallet P2 onto the changing position 'c.'

More specifically, the advance-and-retreat drive motor 20 makes the first arm member 12 advance leftward in Fig. 3. Then, along with the advance, the lower chain 36 makes the spline shaft 30 rotated along the arrow 'e,' the upper chain 40 makes the roller 41 advance by the rotation of the spline shaft 30, causing the roller 41 to engage with the hook 42, and makes the second arm member 13 advance. In this operation, the travel of the upper arm member 13 with respect to the frame member 5 is approximately twice larger than that of the lower arm member 12, hence an approximately double travel speed, too.

This advance makes the front portion of the upper arm member 13 to enter under the preceding-process pallet P1 placed at the machine-side changing position 'c,' in which state the hydraulic cylinder 29 elongates, causing the upper arm member 13 to go up, by which the preceding-process pallet P1 is mounted on the upper arm member 13. In addition, along with this upward move, the spline shaft 30 goes up within the lower bearing 31 and the lower sprocket 33a.

With the preceding-process pallet P1 mounted on the second arm member 13, the drive motor 20 makes the first arm member 12 retreated. Then, along with this retreat, the lower chain 36 makes the spline shaft 30 rotated so that the upper chain 40 is rotated by the rotation of the spline shaft 30, and the roller 41 engage with the hook 42, making the second arm member 13 retreated. In this operation, the travel of the upper arm member 13 with respect to the frame member 5 is approximately twice larger than that of the lower arm member 12, hence an approximately double travel speed, too. Also in this operation, both the first, second arm members 12, 13 retreat from the working space A, so that the working space A is cleared inside, allowing the operator to open the door 4a and enter into the working space A without any difficulty, thus the operator being enabled to do necessary work.

As a result of the retreat, the preceding-process pallet P1 is placed upward of the relay changing position 'b' of the pivot arm 8 of the pivotal changer mechanism 6, in which state the hydraulic cylinder 29 goes down, causing the preceding-process pallet P1' to be moved onto the pivot arm 8.

Thereafter, the pivotal changer mechanism 6 makes the pivot arm 8 pivoted, causing the preceding-process pallet P1' to be pivotally moved toward the setup position 'a'. This state is kept on standby until the machining by the machining center 1 is completed. During this standby period, the next-process pallet P2 is prepared on the setup position 'a' side.

As shown above, since the relay changer mechanism 7 for advancing and retreating the preceding-process pallet P1 or the next-process pallet P2 between the machine-side changing position 'c' and the relay changing position 'b' is provided in this embodiment, the pivotal changer mechanism 6 can be placed away from the machining center 1 without complicating the structure of the pivotal changer mechanism 6, allowing the working space A to be ensured between the machining center 1 and the pallet changer body 3, so that the workability can be improved.

Also, since the relay changer mechanism 7 operates for up-and-down and advancing-and-retreating linear motions in which the pallet, after lifted, is conveyed linearly to a site upward of the relay changing position 'b' or the machine-side changing position 'c' and further lowered, thereby advancing and retreating the preceding-process pallet or the next-process pallet, there is almost no case that the relay changer mechanism 7 is unadoptable in terms of the structure of the changing position 'c' portion of the machine tool, so that the application range can be widened.

Also, since the second advance-and-retreat drive mechanism (double-speed mechanism) 15 for advancing and retreating the second arm member 13 by making use of the advancing-and-retreating motions of the first arm member 12 is provided between the first arm member 12 and the second arm member 13 supported by the first arm member 12 in the relay changer mechanism 7, the second arm member 13 can be advanced and retreated to more extents only by driving the first arm member 12, so that the working space A can be ensured more securely while any complication of the structure can be suppressed.

Furthermore, the speed-increasing mechanism is so constructed that the first arm member 12 is equipped with the lower chain mechanism (driving-side chain mechanism) and the upper chain mechanism (driven-side chain mechanism), where the sprockets 33a, 33b on one end side of the two chain mechanisms are so connected to each other as to be rotated together by the spline shaft 30, while the chain 36 of the lower chain mechanism is fixed to the frame member and moreover the chain 40 of the upper chain mechanism is coupled to the second arm member 13 via the drive rollers 41. Thus, the second arm member 13 can be advanced and retreated to more extents only by driving the first arm member 12 into advance and retreat.

## Claims

1. A pallet changer (2) for use in a machine tool (1) to automatically change a preceding-process pallet (P1) placed at a machine-side changing position (c) and loaded with a machined workpiece thereon for a next-process pallet (P2) placed at a setup position (a) and loaded with an unmachined workpiece thereon, comprising:
- a pivotal changer mechanism (6) for changing said preceding-process pallet (P1) for the next-process pallet (P2) by a pivotal operation at a position between a relay changing position (b) and the setup position (a),
- a relay changer mechanism (7) for advancing and retreating the preceding process pallet (P1) or the next-process pallet (P2) between the machine-side changing position (c) and the relay changing position (b),
wherein a working space (A) is provided between the machine-side changing position (c) and the relay changing position (b);
and wherein the relay changer mechanism (7) is capable of
- retreating a preceding-process pallet (P1) through up-or-down and retreat linear motions for lifting the preceding-process pallet (P1) placed at the machine-side changing position (c), thereafter linearly conveying the preceding-process pallet (P1) to a site upward to the relay changing position (b), and further lowering the preceding-process pallet (P1) to the relay changing position (b), and
- advancing a next-process pallet (P2) through up-or-down and advance linear motions for lifting the next-process pallet (P2) placed at the relay changing position (b), thereafter linearly conveying the next-process pallet (P2) to a site upward of the machine-side changing position (c), and further lowering the next-process pallet (P2) to the machine-side changing position (c).

2. The pallet changer according to claim 1, wherein the relay changer mechanism (7) comprises a first arm member (12) mounted on a frame member (5) so as to be advanceable or retreatable and a second arm member (13) supported on the first arm member (12) so as to be advanceable or retreatable relative to the first arm member (12), and a speed-increasing mechanism for advancing or retreating the second arm member (13) by making use of advance-or-retreat motions of the first arm member (12), said speed-increasing mechanism being provided between the first arm member (12) and the second arm member (13).

3. The pallet changer according to claim 1 or 2, wherein the speed-increasing mechanism is so constructed that the first arm member (12) is equipped with a driving-side chain mechanism and a driven-side chain mechanism each formed by stretching an endless chain on a pair of sprockets disposed so as to be spaced from each other in an advance-or-retreat direction, one-end side sprockets of the two chain mechanisms being coaxially and co-rotationally connected to each other, the chain of the driving-side chain mechanism being fixed to the frame member (5) and the chain of the driven-side chain mechanism being connected to the second arm member (13).

4. The pallet changer according to any of the preceding claims, wherein a cover (4) is provided surrounding the pallet changer (2) and extending towards and contacting said machine tool (1), said cover (4) including an access door (4a) for accessing the working space (A) so that an operator can enter the working space (A) through said access door (4a) to perform maintenance on said machine tool (1).

## Patentansprüche

1. Ein Palettenwechsler (2) zum Gebrauch in einer Werkzeugmaschine (1), um automatisch eine Palette aus einem vorangehenden Prozess (P1), die in einer Wechselposition (c) an der Seite der Maschine plaziert und mit einem bearbeiteten Werkstück beladen ist, gegen eine Palette (P2) für einen nächsten Prozess, die in einer Bereitstellungsposition (a) plaziert und mit einem unbearbeiteten Werkstück beladen ist, auszutauschen, umfassend:
- einen Drehwechselmechanismus (6), um die Palette (P1) aus einem vorangehenden Prozess durch eine Drehoperation zwischen einer Ablösewechselposition (b) und der Bereitstellungsposition (a) gegen die Palette (P2) für den nächsten Prozess auszutauschen,
- einen Ablösewechselmechanismus (7), um die Palette aus dem vorangehenden Prozess (P1) oder die Palette für den nächsten Prozess (P2) zwischen der Wechselposition an der Seite der Maschine (c) und der Ablösewechselposition (b) vorzuschieben und zurückzuziehen,
worin ein Arbeitsraum (A) zwischen der Wechselposition an der Seite der Maschine (c) und der Ablösewechselposition (b) zur Verfügung gestellt wird;
und worin der Ablösewechselmechanismus (7) geeignet ist:
- eine Palette aus einem vorangehenden Prozess (P1) durch lineare Auf- oder Abwärts- und Rückzugsbewegungen zurückzuziehen, um die Palette aus dem vorangehenden Prozess (P1), die in der Wechselposition an der Seite der Maschine (c) plaziert ist, anzuheben, danach die Palette aus dem vorangehenden Prozess (P1) linear zu einer Stelle oberhalb der Ablösewechselposition (b) zu befördern, und weiterhin die Palette aus dem vorangehenden Prozess (P1) auf die Ablösewechselposition (b) abzusenken, und
- die Palette für den nächsten Prozess (P2) durch lineare Auf- oder Abwärts- und Vorschubbewegungen vorwärts zu bewegen, um die Palette für den nächsten Prozess (P2), die an der Ablösewechselposition (b) plaziert ist, anzuheben, und danach die Palette für den nächsten Prozess (P2) zu einer Stelle oberhalb der Wechselposition an der Seite der Maschine (c) zu transportieren und dann die Palette für den nächsten Prozess (P2) auf die Wechselposition an der Seite der Maschine (c) abzusenken.

2. Der Palettenwechsler gemäß Anspruch 1, worin der Ablösewechselmechanismus (7) ein erstes Armteil (12), das derart an einem Rahmenteil (5) befestigt ist, dass es vorschiebbar oder zurückziehbar ist, und ein zweites Armteil (13), das derart an dem ersten Armteil (12) gelagert ist, dass es relativ zu dem ersten Armteil vorschiebbar oder zurückziehbar ist, und einen Geschwindigkeitsvergrößerungsmechanismus, um das zweite Armteil (13) unter Ausnutzung der Vorschub- oder Rückzugsbewegungen des ersten Armteils (12) vorzuschieben oder zurückzuziehen, umfasst, wobei der Geschwindigkeitsvergrößerungsmechanismus zwischen dem ersten Armteil (12) und dem zweiten Armteil (13) angeordnet ist.

3. Der Palettenwechsler gemäß Anspruch 1 oder 2, worin der Geschwindigkeitsvergrößerungsmechanismus so konstruiert ist, dass das erste Armteil (12) mit einem Antriebsseitenkettenmechanismus ausgestattet ist und ein Antriebsseitenkettenmechanismus jeweils durch das Aufspannen einer endlosen Kette auf einem Paar von Zahnrädern, die derart angeordnet sind, dass sie in einer Vorschub- oder Rückzugsrichtung in einem Abstand von zueinander angeordnet sind, geformt wird, wobei die Zahnräder auf der einen Seite der beiden Kettenmechanismen koaxial und gemeinsam rotierend miteinander verbunden sind, die Kette des Antriebsseitenkettenmechanismus an dem Rahmenteil (5) befestigt ist und die Kette des Kettenmechanismus auf der angetriebenen Seite mit dem zweiten Armteil (13) verbunden ist.

4. Der Palettenwechsler gemäß einem der vorangehenden Ansprüche, worin eine Abdeckung (4) vorgesehen ist, die den Palettenwechsler (2) umgibt und sich bis zu der Werkzeugmaschine (1) erstreckt und diese berührt, wobei die Abdeckung (4) eine Zugangstür (4a) beinhaltet, um auf den Arbeitsraum (A) zuzugreifen, so dass ein Operateur den Arbeitsraum (A) durch die Zutrittstür (4a) betreten kann, um Wartungsarbeiten an der Werkzeugmaschine (1) vorzunehmen.

## Revendications

1. Changeur de palettes (2) pour utilisation dans une machine-outil (1) pour changer automatiquement une palette (P1) du procès précédent, placée à une position de changement au côté de la machine (c) et chargé avec une pièce à usiner traitée là-dessus pour une palette (P2) du procès suivant placée à une position de réglage (a) et chargée avec une pièce à usiner non-traité là-dessus, comprenant:
- un mécanisme de changeur pivotal (6) pour changer ladite palette (P1) du procès précédent pour la palette (P2) du procès suivant par une opération pivotale à une position entre la position de changement à relais (b) et la position de réglage (a),
- un mécanisme de changeur à relais (7) pour avancer et retirer la palette du procès précédent (P1) ou la palette du procès suivant (P2) entre la position de changement au côté de la machine (c) et la position de changement à relais (b), où un espace de travail (A) est pourvu entre la position de changement au côté de la machine (c) et la position de changement à relais (b); et où le mécanisme du changeur à relais (7) est capable de
- retirer une palette du procès précédent (P1) par mouvements en haut ou en bas et de retrait linéaires pour lever la palette du procès précédent (P1) placée à la position de changement au côté de la machine (c), ensuite le transport linéaire de la palette du procès précédent (P1) à un lieu en haut de la position de changement à relais (b), et de plus en abaissant la palette du procès précédent (P1) à la position de changement à relais (b), et
- avancer une palette de procès suivant (P2) par mouvements en haut-ou-en bas et d'avance linéaires pour lever la palette du procès suivant (P2) placée à la position de changement à relais (b), ensuite le transport de manière linéaire de la palette du procès suivant (P2) à un lieu en haut de la position de changement au côté de la machine (c), et de plus en abaissant la palette du procès suivant (P2) à la position de changement au côté de la machine (c).

2. Changeur de palettes selon la revendication 1, où le mécanisme du changeur à relais (7) comprend un premier élément de bras (12) monté sur un élément de cadre (5) pour être capable d'avancer et de se retirer et un second élément de bras (13) supporté sur le premier élément de bras (12) pour être capable d'avancer ou de se retirer relatif au premier élément de bras (12), et un mécanisme croissant de vitesse pour avancer et retirer le second élément de bras (13) en faisant usage de mouvements d'avance ou de retrait du premier élément de bras (12), ledit mécanisme croissant de vitesse étant pourvu entre le premier élément de bras (12) et le second élément de bras (13).

3. Changeur de palettes selon la revendication 1 ou 2, où le mécanisme croissant de vitesse est ainsi construit que le premier élément de bras (12) est équipé avec un mécanisme à chaîne au côté d'actionnement et un mécanisme à chaîne au côté actionné, chacun formé par l'étendue d'une chaîne sans fin sur une paire de roues de chaîne disposées pour être espacées de l'une l'autre dans une direction d'avance ou de retrait, les roues de chaîne d'une extrémité des deux mécanismes à chaîne étant connectées de manière co-axiale et co-rotationnale à l'une l'autre, la chaîne du mécanisme à chaîne du côté d'actionnement étant fixée à l'élément de cadre (5) et la chaîne du mécanisme à chaîne du côté actionné étant connectée au second élément de bras (13).

4. Changeur de palettes selon l'une quelconque des revendications antérieures, où un couvercle (4) est pourvu entourant le changeur de palettes (2) et s'étendant vers et contactant ladite machine-outil (1), ledit couvercle (4) incluant une porte d'accès (4a) pour l'accès de l'espace de travail (A) de sorte qu'un opérateur puisse entrer dans l'espace de travail (A) par ladite porte d'accès (4a) pour réaliser l'entretien de ladite machine-outil (1).
